# EUROPEAN PATENT SPECIFICATION

(11) **EP 2 993 434 B1**
(45) Date of publication and mention of the grant of the patent: **05.04.2017**
(21) Application number: 15181559.4
(22) Date of filing: 19.08.2015
(51) Int. Cl.: B23K 3/047, F27B 9/14, F27D 11/06, F27D 11/12, H05B 6/02, H05B 11/00, F27B 5/04, C21D 9/00, F27B 5/06, F27D 7/06, F27D 99/00, C21D 1/42

(54) **DUAL ZONE FURNACE**
ZWEI-ZONEN-OFEN
FOUR À DOUBLE ZONE

(30) Priority: 04.09.2014 US 201462045862 P
(43) Date of publication of application: 09.03.2016
(73) Proprietor: Rolls-Royce Corporation, Indianapolis, Indiana 46225 (US)
(72) Inventor: HENDERKOTT, Joseph, Westfield, IN Indiana 46074 (US); XU, Raymond, Carmal, IN Indiana 46032 (US); SHUCK, Quinlan, Indianapolis, IN Indiana 46220 (US); PROCTOR, Robert, Carmel, IN Indiana 46032 (US)
(74) Representative: Rolls-Royce plc

(56) References cited:
- EP-A1- 2 442 057
- WO-A1-2014/035480

## Description

The present disclosure relates generally to a heating device, and more specifically to a furnace.

A furnace may heat materials to extremely high temperatures needed to carry out the processes of brazing, sintering, and heat treating. The furnace may be able to heat an object to a range of between 2000°C and 2800°C. Heating metals to extremely high temperatures may cause the metals to oxidize rapidly; however providing a vacuum within a furnace may remove oxygen to prevent rapid oxidation. High-temperature furnace brazing may be performed by uniformly heating an assembly to a brazing temperature and holding the assembly at the temperature for a predetermined period of time before cooling the assembly. In some situations, the high temperature required for brazing may lead to unwanted changes in the mechanical properties of base materials used the assembly.

Location specific heat treatment may also be performed in a furnace to alter the physical and sometimes chemical properties of a material. Heat treating an object may heat the object to an extreme temperature to harden or soften the material of the object.

EP 2442057 relates to a heat treatment furnace having a heating section having heating elements using carbon which generates heat when a high-frequency electric current is fed to a coil whose pitch can be adjusted as desired is arranged in a heating chamber. A cooling chamber 80 configured to cool metal to be heat-treated, which has been heated by the heating elements, is disposed below the heating chamber in communication with the heating chamber via a connection section.

WO 2014/035480 relates to a system and method for removing impurities in an induction furnace cooling system. In WO2014/035480, an induction furnace for heating a workpiece includes a chamber, an induction coil positioned in the chamber to provide for heating of the workpiece when a current is provided to the induction coil, and a cooling system fluidly coupled to an interior volume of the chamber, the cooling system including a heat exchanger, a blower fluidly coupled to the heat exchanger and configured to cause a gas to flow through the heat exchanger, and a filter assembly comprising a filtering device, the filter assembly fluidly coupled to the blower and configured to remove impurities from the gas flowing through the cooling system.

The present disclosure may comprise one or more of the following features and combinations thereof.

According to an aspect of the present disclosure, a furnace for heating an assembly is taught. The furnace may comprise a container defining a monolithic internal volume configured to maintain a single vacuum level throughout the monolithic internal volume. The furnace may include a stage moveable between a first position arranged to support an assembly within a first zone of the monolithic internal volume and second position arranged to support an assembly within a second zone of the monolithic internal volume.

In some embodiments, the furnace may include a heating system located within the monolithic internal volume. The heating system may include a radiant heater arranged to provide radiant heat to an assembly located in the first zone and an inductive heater arranged to provide inductive heat to an assembly located in the second zone.

In some embodiments the radiant heater of the furnace may include a first induction coil and a susceptor arranged between the first induction coil and the first zone. In some embodiments, the inductive heater of the furnace may include a second induction coil arranged adjacent to the second zone.

In some embodiments the first zone and the second zone of the furnace may be arranged along an axis that extends through the monolithic internal volume and the stage may move along the axis during movement from the first position to the second position. In some embodiments, the inductive heater of the furnace may include an induction coil arranged in the monolithic internal volume and the induction coil may be movable relative to the first zone normal to the axis to adjust the amount of induction available within the first zone. In some embodiments the radiant heater of the furnace may include an induction coil and a susceptor arranged between the first induction coil and the second zone and wherein the induction coil and the susceptor are movable relative to the second zone normal to the axis to adjust the amount of radiant heat provided to the second zone by the radiant heater. The axis of the furnace may be generally vertical and the first zone may be spaced vertically apart from the second zone along the axis. The furnace may further comprise an insulator arranged in the second zone and may be configured to shield a portion of an assembly arranged in the second zone from being affected by the inductive heater.

According to another aspect of the present disclosure a furnace for heating an article is taught. The furnace may comprise a container defining a monolithic internal volume. The furnace may also include a radiant heater located in the monolithic internal volume which may be configured to provide radiant heat to an assembly located in a first zone of the monolithic internal volume, the radiant heater may include a first induction coil and a susceptor arranged between the first induction coil and the first zone.

In some embodiments the furnace may also include an induction heater located in the monolithic internal volume and may be configured to provide inductive heat to an assembly located in a second zone of the monolithic internal volume, spaced apart from the first zone, the inductive heater may include a first induction coil arranged adjacent to the second zone.

In some embodiments the radiant heater may include a first induction coil and a susceptor arranged between the first induction coil and the first zone. In some embodiments the induction heater of the furnace may include a second induction coil arranged adjacent to the second zone. The first zone and the second zone of the furnace may be arranged along an axis that extends through the monolithic internal volume.

In some embodiments the induction heater may include an induction coil arranged in the monolithic internal volume and the induction coil may be movable to relative to the first zone normal to the axis to adjust the amount of induction available within the first zone. In some embodiments, the radiant heater may include an induction coil and a susceptor arranged between the first induction coil and the second zone and wherein the induction coil and the susceptor may be movable relative to the second zone normal to the axis to adjust the amount of radiant heat provided to the second zone by the radiant heater.

In some embodiments the axis may be generally vertical and the first zone may be spaced vertically apart from the second zone along the axis. The furnace may further comprise an insulator arranged in the second zone and configured to shield a portion of an assembly arranged in the second zone from being affected by the inductive heater.

According to another aspect of the present disclosure, a method of brazing components in a furnace is taught. The method may comprise positioning an assembly including a first component, a second component, and a braze material in a first zone of the monolithic volume defined by a container, applying radiant heat to the assembly to uniformly heat the assembly to a predetermined temperature, moving the assembly to a second zone of the monolithic volume defined by the container, and coupling inductive heat to the braze material and the adjacent base material to further raise the temperature of the braze material above a melting point of the braze material.

In some embodiments, the method may further comprise conditioning the atmosphere within the monolithic volume of the furnace so that the atmosphere within the monolithic volume may be substantially homogenous. Conditioning the atmosphere of the furnace may include introducing desired gasses into the monolithic volume and a pulling a desired vacuum within the monolithic volume. In some embodiments, moving the assembly to the second zone may be accomplished by changing the position of a stage supporting the assembly within the monolithic volume along a vertical axis.
Fig. 1 is a diagrammatic view of a furnace adapted to apply both indirect and direct heat to an assembly while keeping the assembly in a single controlled volume showing an illustrative assembly exposed to indirect heating by a radiant heater in a first zone of the volume;
Fig. 2 is similar to Fig. 1 showing the assembly exposed to direct heating by an induction heater in a second zone of the volume; and
Fig. 3 is a block diagram showing a method of brazing an assembly using the furnace of Figs. 1 and 2.

For the purposes of promoting an understanding of the principles of the disclosure, reference will now be made to a number of illustrative embodiments illustrated in the drawings and specific language will be used to describe the same.

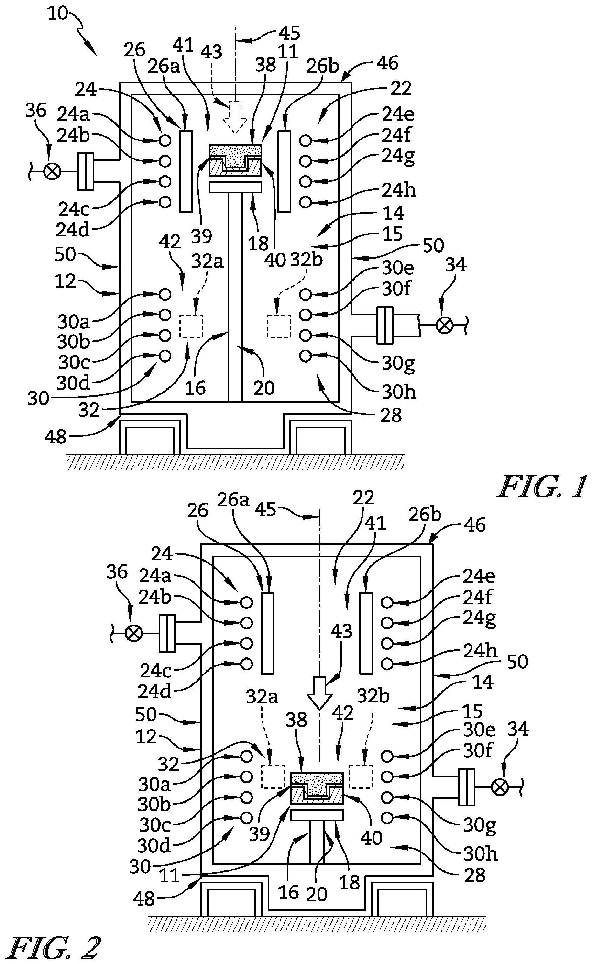

In the illustrative embodiment, a furnace 10 may include a container 12, a heating system 14, and a transport component 16, as depicted diagrammatically in Figs. 1 and 2. The container 12 may house the heating system 14 and the transport component 16 in a monolithic internal volume 15. The heating system 14 may provide multiple heating zones within the monolithic internal volume 15 for applying both direct and indirect heat to an assembly 11, without transferring the assembly 11 from one furnace to another. The transport component 16 may be configured to move the assembly 11 between heating zones of the heating system 14.

The container 12 may define the monolithic volume 15 and may be a pressure vessel configured to regulate gases within the volume 15 to a constant vacuum level using a gas inlet valve 36 and a gas outlet valve 34 along with various pumps and gas supplies, as depicted in Figs. 1 and 2. Any number of atmospheric gases such as argon, nitrogen, and hydrogen may be used interchangeably to keep a steady environment. As a metal heats it may oxidize rapidly and oxygen may be removed from the vacuum by the gas outlet valve 34. In the illustrative embodiment, the temperature may reach 1482°C or higher and the vacuum level may reach 10⁻⁶ Torr or higher. Sensors may be included in order to monitor the level of oxygen, the temperature, and the pressure within the container 12.

The container 12 may include a top wall 46, bottom wall 48, and tubular side walls 50 for creating a monolithic volume 15, as shown in Figs. 1 and 2. The monolithic internal volume 15 may be undivided by doors, barriers, curtains or the like such that an assembly 11 may move without hindrance throughout the volume 15. The monolithic internal volume 15 may allow specialty metals, alloys and other elements to be heated that may oxidize if heated in the presence of air and/or transferred from a first heating element to a second heating element.

The transport component 16 may include a stage 18 and a stage mover 20, as illustrated in the furnace 10 of Figs. 1 and 2. The stage 18 may be connected to the stage mover 20 and may act as a platform or fixture for holding any number of components, articles, assemblies and/or objects. Illustratively the assembly 11 may be a ceramic component 38 and a metallic component 40 coupled by braze material 39 all included in the assembly 11, as shown in Figs. 1 and 2. In the illustrative embodiment, the stage mover 20 may include a hydraulic pump and a piston. In other embodiments, electric motors or other suitable mechanisms may be used as the stage mover 20.

The heating system 14 may include a radiant heater 22 and an inductive heater 28 both located in the monolithic internal volume 15 of the container 12 as shown, for example, in Figs. 1 and 2. The radiant heater 22 may be arranged adjacent to the first zone 41 of the volume 15 defined by the vacuum container 12 and may be configured to apply direct, radiant heat to the assembly 11 when the assembly 11 is in the first zone 41, as suggested in Fig. 1. The induction heater 28 may be arranged adjacent to the second zone 41 of the volume 15 and may be configured to apply indirect, inductive heat to at least some parts of the assembly 11, as suggested in Fig. 2. Any combination of arrangements between the induction heater 28 and the radiant heater 22 may be conceived wherein the induction heater 28 and the radiant heater 22 are housed within the monolithic internal volume.

In the illustrative embodiment, the first zone 41 and the second zone 42 may be arranged along a vertical axis 45 with the first zone 41 above the second zone 42, as shown in Figs. 1 and 2. Accordingly, the radiant heater 22 and the inductive heater 28 may be arranged along the axis 45 with the radiant heater 22 above the inductive heater 28. This arrangement allows assembly 11 to be quickly moved downward by the transport component 15 from the first zone 41 and the radiant heater 22 to the second zone 42 and the inductive heater 28 aided by gravitational forces as depicted with an arrow 43 in Figs. 1 and 2. In other embodiments, the zones 41, 42 and heaters 22, 28 may be arranged along a horizontal axis or in other suitable locations within the container 12.

In the illustrative embodiment, the radiant heater 22 may include a combination of susceptors 26a, 26b and a plurality of induction coils 24a, 24b, 24c, 24d, 24e, 24f, 24g, and 24h, as depicted in Figs. 1-2. The susceptors 26 may be configured to provide radiant heat to the component when acted upon by the induction coils 24. The induction coils 24 and/or susceptors 26 may be movable relative to the first zone 41 normal to the axis 45 to adjust the amount of induction applied to the susceptors, thereby adjusting the level of radiant heat applied within the first zone 41. Illustratively, the induction coils 24 may be arranged such the susceptors 26 may be between the induction coils 24 and the first zone 40.

The radiant heater 22 may transfer radiant heat from the susceptors 26 to the assembly 11. Radiant heat may be provided to the assembly 11 heating the entire assembly 11 or a portion of the assembly 11 to a temperature below the melting point of the metals such that changes to the metal's physical and chemical properties will not occur. The application of radiant heat will allow the assembly 11 to be uniformly heated prior to one of the steps of brazing, heat treating, or heating by induction in the second zone 42 by the induction heater 28.

In the illustrative embodiment, an induction heater 28 may include a plurality of induction coils 30a, 30b, 30c, 30d, 30e, 30f, 30g, 30h, and optionally may include an insulator 32a, 32b, as depicted in Figs. 1 and 2. The induction coils 30 may be configured to provide inductive heat or indirect heat to parts of the assembly 11 susceptible to inductive heating. The shape of the induction coils 30 may be predetermined to correspond to the assembly 11 to be heated, such that the coils may interact with only the portion to be heated. The optional insulator 32 may be a shield and may be arranged in the second zone 42 and may be configured to shield a portion of the assembly 11 from the induction coils 30. Accordingly parts of the assembly 11 susceptible to inductive heating but shielded from the induction coils 30 may not be heated by the induction heater 28.

In some embodiments, as illustratively shown, heat or wavelengths, from the induction heater 28 may couple to the braze material 39 heating the braze material 39 and also may heat the base material. The ceramic component 38 or a metallic containing component may be insulated by the insulator 40. The induction heater 28 may use electromagnetic induction where eddy current may be generated to heat metal used in the assembly 11.

High temperature brazing, heat treating or sintering may require that heat be applied to an entire assembly 11 rather than just at a specific location, which may result in part distortions. Heating the assembly 11 uniformly to a temperature below the melting temperature and subsequently providing localized heating thereby brazing, sintering, or heat treating the area may reduce the adverse stress effects by reducing the high temperature exposure of entire assembly. The furnace 10 described herein may reduce the need to remove the assembly 11 from the container 12 allowing it to cool, prior to subsequent brazing. The system described herein may also improve ability to join combinations of advanced materials such as ceramic matrix composites and metal-intermetallic composites and dissimilar metallics.

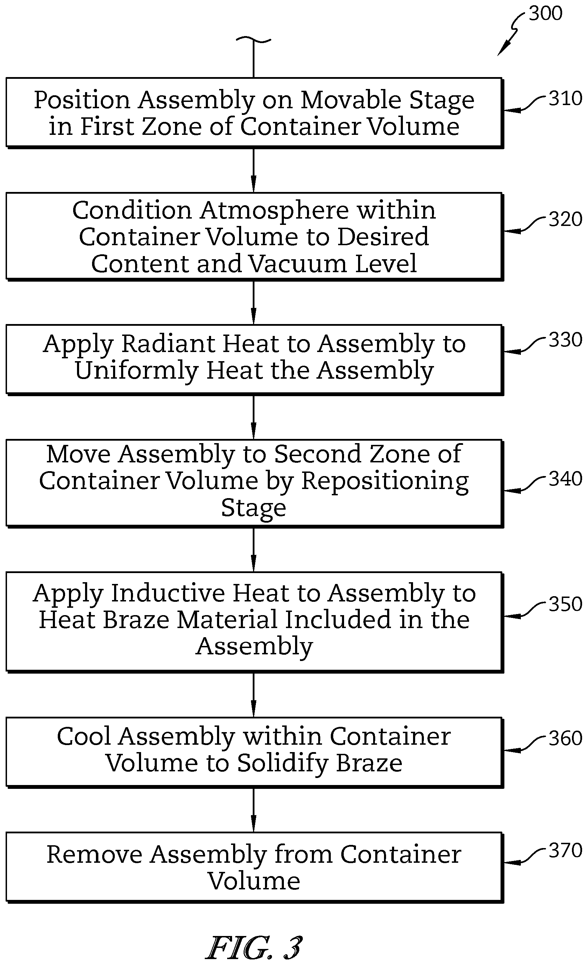

One illustrative method 300 of heating an assembly, such as brazing the ceramic-containing component 38 and the metallic containing component 40 with the braze material 39 of assembly 11, shown in Figs. 1 and 2 is shown in Fig. 3. While the illustrative method uses brazing, the furnace 10 may be used to heat treat an object, sinter an object, or any other method of altering the material through the application of heat may be performed within the furnace 10.

In a step 310 of the method 300, the assembly 11 may be positioned on the moveable stage 18 in the first zone 41 of the furnace 10, as suggested in Fig. 3. In a step 320 of the method 300, the atmosphere in the container 12 may be brought to the desired content and vacuum level. The desired atmosphere may be reached by adding or removing air using the gas inlet valve 36 and/or the gas release valve 34 of Figs. 1 and 2. Alternatively, the stage may be immobile and the first zone 41 and the second zone 42 of the furnace 10 may move around the assembly 11 while the assembly 11 may be held in a stationary position.

In a step 330 of the method 300, radiant heat may be applied to the assembly 11 to uniformly heat the assembly 11 of Figs. 1 and 2, as suggested in Fig. 3. The radiant heat may be applied in the first zone 41 of the assembly 11. The combination of the induction coils 24 corresponding to the susceptors 26 may uniformly heat the entirety of the assembly 11 to a predetermined temperature. In a step 340 of the method 300, the assembly 11 may be moved to the second zone 42 of the container 12. The assembly 11 may be moved to the second zone 42 of the container by changing the position of the movable stage 18 or any other suitable means for transporting the assembly 11, as shown by the arrow 43 in Figs. 1 and 2 and suggested in Fig 3.

In a step 340 of the method 300, inductive heat may be applied to heat the braze material 39 included in the assembly 11. The temperature to heat the braze material 39 may be higher than the temperature used to radiantly heat the assembly 11 in the first zone 41. The inductive heat may be applied using the induction coils 30 shown in Figs. 1 and 2. Optionally insulators 32 in the second zone 42 may insulate the ceramic portion 38 or any portion of the assembly 11 which may not be exposed to induction heating for reaching the brazing temperatures in the second zone 42.

In a step 360 of the method 300, the assembly 11 may be cooled within the container volume 12 to solidify braze. The assembly 11 may be cooled in a predetermined atmosphere allowing for the assembly 11 to cool in the contained environment. In a step 370 of the method 300, the assembly 11 may be removed from the container volume 12. The assembly 11 may be removed only once at the end of the brazing process rather than between application of radiant heat and inductive heat.

Optionally the inductive heat may be coupled to a susceptor in the second zone to apply radiant heat to the braze material and the adjacent material to further raise the temperature of the braze material above a melting point of the braze material. In another option, the inductive heat may be coupled to the localized base material (without braze materials) to further raise the temperature of the base material for the localized heat treatment. In a third option, the inductive heat may be coupled to a susceptor in a second zone to apply radiant heat to the localized base material (without braze materials) to further raise the temperature of the base material for the localized heat treatment.

While the disclosure has been illustrated and described in detail in the foregoing drawings and description, the same is to be considered as exemplary and not restrictive in character, it being understood that only illustrative embodiments thereof have been shown and described and that all changes and modifications that come within the scope of the claims are desired to be protected.

## Claims

1. A furnace (10) comprising
a container (12) defining a monolithic internal volume configured to maintain a single vacuum level throughout the monolithic internal volume (15),
a stage (18) moveable between a first position arranged to support an assembly (11) within a first zone (41) of the monolithic internal volume (15) and a second position arranged to support the assembly (11) within a second zone (42) of the monolithic internal volume (15), and
a heating system (14) located within the monolithic internal volume (15), the heating system (14) including a radiant heater (22) arranged to provide radiant heat to the assembly (11) located in the first zone (41) and an inductive heater (28) arranged to provide inductive heat to the assembly (11) located in the second zone (42).

2. The furnace (10) of Claim 1, wherein the radiant heater (22) includes a first induction coil (24, 30) and a susceptor (26) arranged between the first induction coil (24, 30) and the first zone (41).

3. The furnace (10) of Claim 2, wherein the inductive heater (28) includes a second induction coil (24, 30) arranged adjacent to the second zone (42).

4. The furnace (10) of any of Claims 1-3, wherein the first zone (41) and the second zone (42) are arranged along an axis (45) that extends through the monolithic internal volume (15) and the stage (18) moves along the axis during movement from the first position to the second position.

5. The furnace (10) of Claim 4, wherein the inductive heater (28) includes an induction coil (24, 30) arranged in the monolithic internal volume (15) and the induction coil (24, 30) is movable relative to the first zone (41) normal to the axis (45) to adjust the amount of induction available within the first zone (41).

6. The furnace (10) of Claim 4, wherein the radiant heater (22) includes an induction coil (24, 30) and a susceptor (26) arranged between the first induction coil (24, 30) and the second zone (42) and wherein the induction coil (24, 30) and the susceptor (26) are movable relative to the second zone (42) normal to the axis (45) to adjust the amount of radiant heat provided to the second zone (42) by the radiant heater (22).

7. The furnace (10) of Claim 4, wherein the axis (45) is generally vertical and the first zone (42) is spaced vertically apart from the second zone (42) along the axis (45).

8. The furnace (10) of any of Claims 1-7, further comprising an insulator (32, 40) arranged in the second zone (42) and configured to shield a portion of an article arranged in the second zone (42) from being affected by the inductive heater (28).

9. The furnace (10) of any of Claims 4-8, wherein the axis (45) is generally vertical and the first zone (41) is spaced vertically apart from the second zone (42) along the axis (45).

10. A method of brazing components in a furnace (10), the method comprising
positioning an assembly (11) including a first component, a second component, and a braze material in a first zone (41) of a monolithic volume (15) defined by a container (12),
applying radiant heat to the assembly (11) to uniformly heat the assembly (11) to a predetermined temperature,
moving the assembly (11) to a second zone (42) of the monolithic volume (15) defined by the container (12), and
coupling inductive heat to the braze material (39) and the adjacent base material to further raise the temperature of the braze material (39) above a melting point of the braze material (39).

11. The method of Claim 10, further comprising conditioning the atmosphere within the monolithic volume (15) so that the atmosphere within the monolithic volume (15) is homogenous.

12. The method of Claim 11, wherein conditioning the atmosphere includes introducing desired gasses into the monolithic volume (15) and pulling a desired vacuum within the monolithic volume (15).

13. The method of any one of claims 10 to 12, wherein moving the assembly to the second zone (42) is accomplished by changing the position of a stage supporting the assembly within the monolithic volume (15) along a vertical axis (45).

## Patentansprüche

1. Ofen (10), aufweisend
einen Behälter (12), der ein monolithisches Innenvolumen definiert und konfiguriert ist, um durch das monolithische Innenvolumen (15) durchgehend ein einzelnes Vakuumniveau aufrechtzuerhalten,
eine Plattform (18), verschiebbar zwischen einer ersten Position, die angeordnet ist, um eine Baugruppe (11) in einer ersten Zone (41) des monolithischen Innenvolumens (15) zu tragen, und einer zweiten Position, die angeordnet ist, um die Baugruppe (11) in einer zweiten Zone (42) des monolithischen Innenvolumens (15) zu tragen, und
ein Heizsystem (14), das sich in dem monolithischen Innenvolumen (15) befindet, wobei das Heizsystem (14) einen Heizstrahler (22), der angeordnet ist, um eine Strahlungswärme für die Baugruppe (11) bereitzustellen, die sich in der ersten Zone (41) befindet, und eine induktive Heizvorrichtung (28) enthält, die angeordnet ist, um induktive Wärme für die Baugruppe (11) bereitzustellen, die sich in der zweiten Zone (42) befindet.

2. Ofen (10) nach Anspruch 1, wobei der Heizstrahler (22) eine erste Induktionsspule (24, 30) und einen Suszeptor (26) enthält, der zwischen der ersten Induktionsspule (24, 30) und der ersten Zone (41) angeordnet ist.

3. Ofen (10) nach Anspruch 2, wobei die induktive Heizvorrichtung (28) eine zweite Induktionsspule (24, 30) enthält, die an die zweite Zone (42) angrenzend angeordnet ist.

4. Ofen (10) nach einem der Ansprüche 1 bis 3, wobei die erste Zone (41) und die zweite Zone (42) entlang einer Achse (45) angeordnet sind, die sich durch das monolithische Innenvolumen (15) erstreckt, und die Plattform (18) sich während der Verschiebung von der ersten Position in die zweite Position entlang der Achse bewegt.

5. Ofen (10) nach Anspruch 4, wobei die induktive Heizvorrichtung (28) eine Induktionsspule (24, 30) enthält, die in dem monolithischen Innenvolumen (15) angeordnet ist, und die Induktionsspule (24, 30) relativ zu der ersten Zone (41) senkrecht zu der Achse (45) verschiebbar ist, um die in der ersten Zone (41) verfügbare Induktionsmenge anzupassen.

6. Ofen (10) nach Anspruch 4, wobei der Heizstrahler (22) eine Induktionsspule (24, 30) und einen Suszeptor (26) enthält, der zwischen der ersten Induktionsspule (24, 30) und der zweiten Zone (42) angeordnet sind, und wobei die Induktionsspule (24, 30) und der Suszeptor (26) relativ zu der zweiten Zone (42) senkrecht zu der Achse (45) verschiebbar sind, um die für die zweite Zone (42) durch den Heizstrahler (22) bereitgestellte Menge an Strahlungswärme anzupassen.

7. Ofen (10) nach Anspruch 4, wobei die Achse (45) im Allgemeinen vertikal ist, und die erste Zone (41) von der zweiten Zone (42) entlang der Achse (45) vertikal beabstandet ist.

8. Ofen (10) nach einem der Ansprüche 1 bis 7, ferner aufweisend einen Isolator (32, 40), der in der zweiten Zone (42) angeordnet und konfiguriert ist, um einen Abschnitt eines in der zweiten Zone (42) angeordneten Elements davor abzuschirmen, durch die induktive Heizvorrichtung (28) beeinträchtigt zu werden.

9. Ofen (10) nach einem der Ansprüche 4 bis 8, wobei die Achse (45) im Allgemeinen vertikal ist, und die erste Zone (41) von der zweiten Zone (42) entlang der Achse (45) vertikal beabstandet ist.

10. Verfahren zum Löten von Komponenten in einem Ofen (10), wobei das Verfahren aufweist:
ein Positionieren einer Baugruppe (11) mit einer ersten Komponente, einer zweiten Komponente und einem Lötmaterial in einer ersten Zone (41) eines monolithischen Volumens (15), das durch einen Behälter (12) definiert wird,
ein Anwenden einer Strahlungswärme auf die Baugruppe (11), um die Baugruppe (11) gleichmäßig auf eine vorbestimmte Temperatur zu erwärmen,
eine Verschieben der Baugruppe (11) in eine zweite Zone (42) des monolithischen Volumens (15), das durch den Behälter (12) definiert wird, und
ein Koppeln von induktiver Wärme mit dem Lötmaterial (39) und dem angrenzenden Basismaterial, um die Temperatur des Lötmaterials (39) weiter über einen Schmelzpunkt des Lötmaterials (39) zu erhöhen.

11. Verfahren nach Anspruch 10, ferner aufweisend ein Konditionieren der Atmosphäre in dem monolithischen Volumen (15), sodass die Atmosphäre in dem monolithischen Volumen (15) homogen ist.

12. Verfahren nach Anspruch 11, wobei das Konditionieren der Atmosphäre ein Einführen erwünschter Gase in das monolithische Volumen (15) und ein Ziehen eines erwünschten Vakuums in dem monolithischen Volumen (15) enthält.

13. Verfahren nach einem der Ansprüche 10 bis 12, wobei ein Verschieben der Baugruppe in die zweite Zone (42) erreicht wird, indem die Position einer Plattform, die die Baugruppe in dem monolithischen Volumen (15) trägt, entlang einer Achse (45) geändert wird.

## Revendications

1. Four (10) comprenant
un conteneur (12) définissant un volume interne monolithique configuré pour maintenir un niveau de vide unique à travers le volume interne monolithique (15),
un étage (18) mobile entre une première position agencée pour supporter un ensemble (11) à l'intérieur d'une première zone (41) du volume interne monolithique (15) et une deuxième position agencée pour supporter l'ensemble (11) à l'intérieur d'une deuxième zone (42) du volume interne monolithique (15), et
un système de chauffage (14) localisé à l'intérieur du volume interne monolithique (15), le système de chauffage (14) incluant un chauffage radiant (22) agencé pour fournir une chaleur rayonnante à l'ensemble (11) localisé dans la première zone (41) et un chauffage par induction (28) agencé pour fournir une chaleur inductive à l'ensemble (11) localisé dans la deuxième zone (42).

2. Four (10) selon la revendication 1, dans lequel le chauffage radiant (22) inclut une première bobine par induction (24, 30) et un suscepteur (26) agencé entre la première bobine par induction (24, 30) et la première zone (41).

3. Four (10) selon la revendication 2, dans lequel le chauffage par induction (28) inclut une deuxième bobine par induction (24, 30) agencée adjacente à la deuxième zone (42).

4. Four (10) selon l'une quelconque des revendications 1 à 3, dans lequel la première zone (41) et la deuxième zone (42) sont agencées le long d'un axe (45) qui s'étend à travers le volume interne monolithique (15) et l'étage (18) se déplace le long de l'axe tandis qu'il se déplace depuis la première position vers la deuxième position.

5. Four (10) selon la revendication 4, dans lequel le chauffage par induction (28) inclut une bobine par induction (24, 30) agencée dans le volume interne monolithique (15) et la bobine par induction (24, 30) est mobile par rapport à la première zone (41) normale par rapport à l'axe (45) pour ajuster la quantité d'induction disponible à l'intérieur de la première zone (41).

6. Four (10) selon la revendication 4, dans lequel le chauffage radiant (22) inclut une bobine par induction (24, 30) et un suscepteur (26) agencé entre la première bobine par induction (24, 30) et la deuxième zone (42) et dans lequel la bobine par induction (24, 30) et le suscepteur (26) sont mobiles par rapport à la deuxième zone (42) normale par rapport à l'axe (45) pour ajuster la quantité de chaleur rayonnante délivrée à la deuxième zone (42) par le chauffage radiant (22).

7. Four (10) selon la revendication 4, dans lequel l'axe (45) est globalement vertical et la première zone (42) est espacée verticalement de la deuxième zone (42) le long de l'axe (45).

8. Four (10) selon l'une quelconque des revendications 1 à 7, comprenant en outre un isolant (32, 40) agencé dans la deuxième zone (42) et configuré pour protéger une partie d'un article agencé dans la deuxième zone (42) afin qu'elle ne soit pas affectée par le chauffage par induction (28).

9. Four (10) selon l'une quelconque des revendications 4 à 8, dans lequel l'axe (45) est globalement vertical et la première zone (41) est espacée verticalement de la deuxième zone (42) le long de l'axe (45).

10. Procédé de brasage de composants dans un four (10), le procédé comprenant
le positionnement d'un ensemble (11) incluant un premier composant, un deuxième composant et un matériau de brasage dans une première zone (41) d'un volume monolithique (15) défini par un conteneur (12),
l'application d'une chaleur rayonnante sur l'ensemble (11) pour chauffer uniformément l'ensemble (11) jusqu'à une température prédéterminée,
le déplacement de l'ensemble (11) jusqu'à une deuxième zone (42) du volume monolithique (15) défini par le conteneur (12), et
le couplage de la chaleur inductive au matériau de brasage (39) et au matériau de base adjacent pour élever encore la température du matériau de brasage (39) au-dessus d'un point de fusion du matériau de brasage (39).

11. Procédé selon la revendication 10, comprenant en outre le conditionnement de l'atmosphère à l'intérieur du volume monolithique (15) de manière à ce que l'atmosphère à l'intérieur du volume monolithique (15) soit homogène.

12. Procédé selon la revendication 11, dans lequel le conditionnement de l'atmosphère inclut l'introduction de gaz souhaités dans le volume monolithique (15) et la création d'un vide souhaité à l'intérieur du volume monolithique (15).

13. Procédé selon l'une quelconque des revendications 10 à 12, dans lequel le déplacement de l'ensemble vers la deuxième zone (42) est réalisé en changeant la position d'un étage supportant l'ensemble à l'intérieur du volume monolithique (15) le long d'un axe vertical (45).
